# EUROPÄISCHE PATENTANMELDUNG

(11) **EP 2 450 605 A2**
(43) Veröffentlichungstag der Anmeldung: **09.05.2012**
(21) Anmeldenummer: 11193685.2
(22) Anmeldetag: 01.04.2009
(51) Int. Cl.: F16K 7/12, F16K 7/06

(54) **Spindelanordnung für ein Membranventil**

(62) Teilanmeldung aus: 09157066.3
(71) Anmelder: Georg Fischer Rohrleitungssysteme AG, 8201 Schaffhausen (CH)
(72) Erfinder: Hunnekuhl, Christian, 49086 Osnabrück (DE); Stumpp, Jürgen, 79771 Klettgau (DE); Hunnekuhl, Jörg, 79798 Jestetten (DE); Bannwarth, Walter, 79787 Lauchringen (DE)
(74) Vertreter: De Colle, Piergiacomo

(57) **Zusammenfassung**

Spindelanordnung für ein Membranventil enthaltend eine Spindel, ein Druckstück, eine Verbindungsmutter und eine Befestigungsmutter wobei die Befestigungsmutter mit dem Membranstift verbunden ist, wobei die Befestigungsmutter axial verschiebbar angeordnet ist.

## Beschreibung

Die vorliegende Erfindung bezieht sich auf ein Membranventil mit einem Gehäuseoberteil, das eine Betätigungsvorrichtung zur Betätigung des Ventils aufnimmt, und mit einem Gehäuseunterteil, das einen Aufnahmebereich zur Aufnahme einer Membran aufweist, wobei im Gehäuseunterteil unterhalb der Membran ein einen Strömungskanal bildender zentraler Bereich ausgebildet ist.

Im Rohrleitungsbau werden Membranventile eingesetzt um Förderströme unterschiedlicher Medien zu regeln. Ein Membranventil zeichnet sich aus durch wenige Einzelteile, die mit dem Medium in Berührung kommen. Beim Ersatz des eigentlichen Stellgliedes des Ventils muss lediglich die Membran ausgewechselt werden. Das Membranventil ist eher unempfindlich gegenüber Verschmutzungen. Ein Membranventil eignet sich deshalb gut für die Regelung von Medienströmen, die Feststoffe enthalten.

Aus der DE 10 2004 001 045-A1 ist ein gattungsgemässes Membranventil bekannt, wobei die Querschnittsfläche in Abhängigkeit vom Strömungsweg durch das Ventil vom Gehäuseeingang bis zum Dichtsteg kontinuierlich abnimmt und anschliessend vom Dichtsteg bis zum Gehäuseausgang wieder kontinuierlich zunimmt.

Ausgehend von diesem Stand der Technik ist es Aufgabe der Erfindung, ein Membranventil anzugeben, wobei die Strömung durch das Ventilgehäuse möglichst gleichmässig und ohne Hindernisse erfolgt.

Diese Aufgabe wird gelöst durch ein Membranventil mit einem Gehäuseoberteil, das eine Betätigungsvorrichtung zur Betätigung des Ventils aufnimmt, und mit einem Gehäuseunterteil, das einen Aufnahmebereich zur Aufnahme einer Membran aufweist, wobei im Gehäuseunterteil unterhalb der Membran ein einen Strömungskanal bildender zentraler Bereich ausgebildet ist, wobei die Querschnittsfläche des Strömungskanals im zentralen Bereich des Gehäuseunterteils im geöffneten Zustand des Ventils konstant ist.

Bevorzugte Weiterbildungen der Erfindung ergeben sich aus den abhängigen Ansprüchen.

Es ist von Vorteil, dass das Membranventil einfach in bestehenden Rohrleitungen eingebaut werden kann. Dies wird dadurch erreicht, dass in Strömungsrichtung gesehen, die Querschnittsfläche des Strömungskanals nacheinander eine kreisförmige Form, eine ovale Form und eine kreisförmige Form aufweist. Das Membranventil ist gegenüber der Mittellinie der Membran symmetrisch ausgebildet und kann in beiden Richtungen in dem Rohrleitungssystem eingebaut werden.

Es ist auch von Vorteil, dass die Membran möglichst einfach im Ventilgehäuse eingebaut werden kann. Dies wird dadurch erreicht, dass das Gehäuseoberteil ein Innengehäuse und ein Aussengehäuse aufweist, wobei das Aussengehäuse mit dem Aufnahmebereich des Gehäuseunterteils verbunden angeordnet ist. Dies wird auch dadurch erreicht, dass die Membran im Aufnahmebereich zwischen dem Boden des Aufnahmebereichs und der Unterkante des Innengehäuses angeordnet ist.

Ein Ausführungsbeispiel der Erfindung wird anhand der Figuren beschrieben. Es zeigen:
Figur 1 eine perspektivische Sicht auf ein erfindungsgemässes Membranventil,
Figur 2 einen Schnitt durch das Membranventil von Figur 1,
Figur 3 einen perspektivisch geschnittenen Bereich des Membranventils,
Figur 4 eine Darstellung der Querschnittsflächen in verschiedenen Abschnitten des Strömungskanals eines bestehenden Membranventils,
Figur 5 eine Darstellung der Querschnittsflächen in verschiedenen Abschnitten des Strömungskanals des erfindungsgemässen Membranventils,
Figur 6 ein Diagramm zum Vergleich der Änderung der Querschnittsfläche in Abhängigkeit der Länge des Strömungskanals,
Figur 7 einen Schnitt durch die Zusammenstellung von Membranhalter und Spindel des Membranventils und
Figur 8 einen Schnitt durch den Membranhalter des Membranventils.

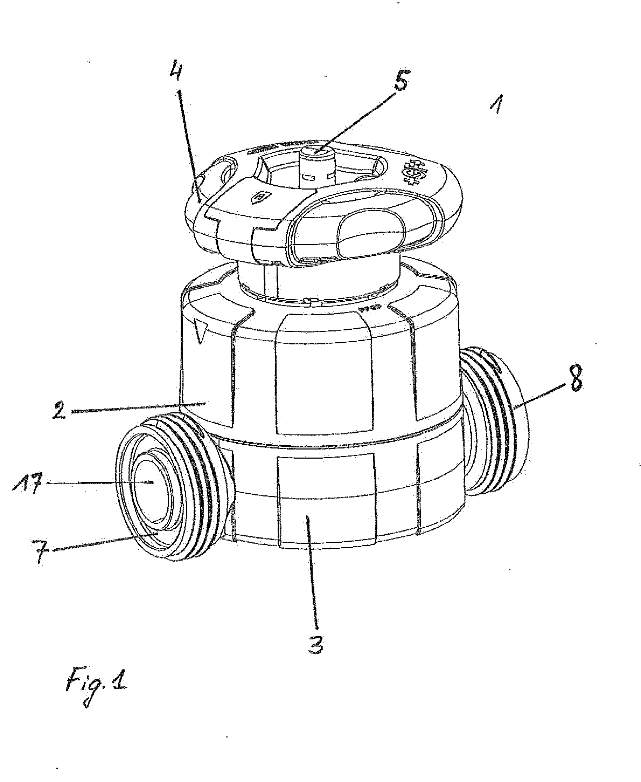

In Figur 1 ist ein Membranventil 1 perspektivisch dargestellt. Das Membranventil 1 besteht in Wesentlichen aus einem Gehäuseoberteil 2, einem dazu passenden Gehäuseunterteil 3, einem Betätigungsorgan, hier dargestellt als einem Handrad 4 mit einem Anzeigestift 5. Das Gehäuseunterteil 3 weist drei Öffnungen 7,8,9 und einen Strömungskanal 17 auf. Eine erste Öffnung 9 ist zwischen dem Gehäuseoberteil 2 und dem Gehäuseunterteil 3 angeordnet ist und senkrecht zum Strömungskanal 17 ausgebildet und ist als Aufnahmebereich 9 für die Membran 11 ausgebildet. Die zwei weiteren Öffnungen 7,8 sind als Rohrverbindungselementen 7, 8 zur Verbindung des Membranventils 1 mit dem Rohrleitungssystem ausgebildet.

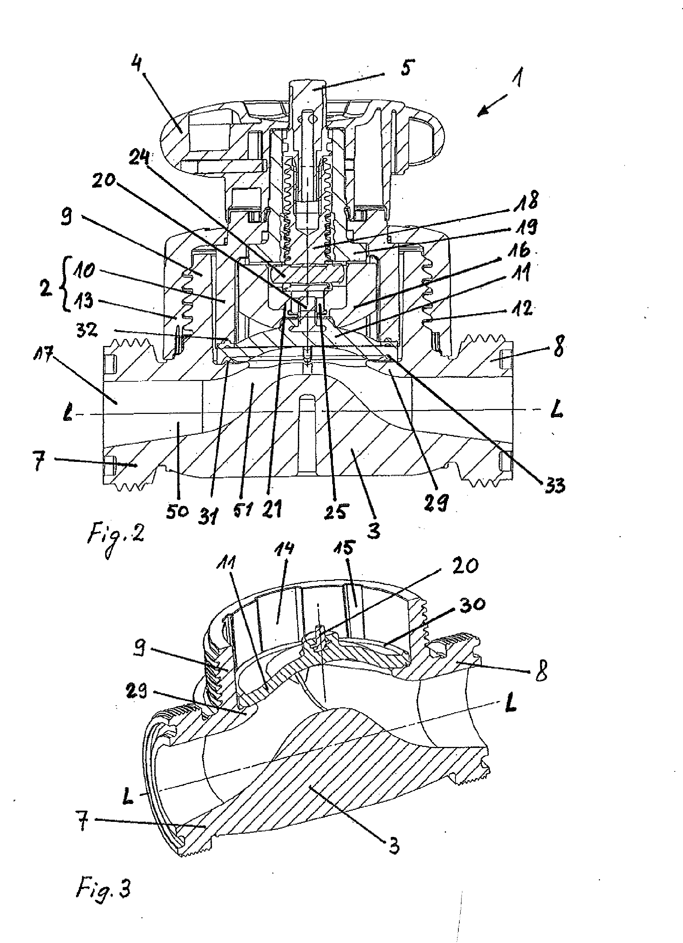

In Figur 2 ist das Membranventil 1 von Figur 1 geschnitten entlang der Rohrleitungsachse L dargestellt. In Figur 3 ist das Gehäuseunterteil 3 geschnitten entlang der Leitungsachse L und perspektivisch dargestellt. Der Strömungskanal 17 weist keine scharfe Kanten oder Absätze auf. Die Rohrleitungen werden an den zwei Rohrverbindungselementen 7, 8 angeschraubt, oder, bei entsprechender Ausführung mit einem anderen Verbindungsverfahren, beispielsweise durch Elektroschweissen oder mit einer Flanschverbindung verbunden. Das Membranventil 1 ist bezüglich der Strömungsrichtung symmetrisch und indifferent ausgebildet. Die Symmetrieachse wird dabei durch die Mittellinie der Membran 11 dargestellt. Sowohl das erste Rohrverbindungselement 7 als das zweite Rohrverbindungselement 8 kann sowohl als Zulauf als auch als Ablauf für den Strömungskanal 17 benutzt werden. Das Membranventil 1 kann in jeder Lage ohne Rücksicht auf die Strömungsrichtung eingebaut werden.

Der Aufnahmebereich 9 des Gehäuseunterteils 3 ist kreisförmig ausgebildet. Der Aufnahmebereich 9 dient nicht nur zur Aufnahme der Membran 11 sondern auch zur Befestigung des Gehäuseoberteils 2. Das Gehäuseoberteil 2 besteht aus einem Innengehäuse 10 und einem Aussengehäuse 13. Auf der Aussenseite des Aufnahmebereichs 9 ist beispielsweise ein Schraubgewinde 12 zur Verschraubung mit dem Aussengehäuse 13 ausgebildet. Auf der Innenseite des Aufnahmebereichs 9 sind, wie in Figur 3 ersichtlich, mehrere in axialer Richtung verlaufende Vertiefungen 14, 15 ausgebildet. Die zwei entlang der Mittellinie der Membran 11 und gegenüber einander angeordneten identischen Vertiefungen 14 dienen zur Fixierung der Membran 11. Weitere jeweils vier um 90° versetzt angeordnete Vertiefungen 15 dienen zur Fixierung des Innengehäuses 10, das auf der Aussenseite vier zu den Vertiefungen 15 passenden Nocken aufweist. Der Aufnahmebereich 9, das Innengehäuse 10 und das zum Innengehäuse 10 konzentrisch angeordnete Aussengehäuse 13 des Gehäuseoberteils 2 sind kreisförmig ausgebildet. Die Membran 11 weist also eine Indexierung auf, die getrennt ist von der Indexierung des Innengehäuses 10. Hiermit wird erreicht, dass das Innengehäuse 10 bei gleichbleibender Membranlage gedreht eingesetzt werden kann.

Die Membran 11 ist im Aufnahmebereich 9 zwischen dem Boden 29 des Aufnahmebereichs 9 und der Unterkante des Innengehäuses 10 eingeklemmt angeordnet. Die Klemmung der Membran 11 wird durch die Verbindung des Gehäuseoberteils 2 mit dem Gehäuseunterteil 3 erreicht. Die Unterkante des Innengehäuses 10, der Boden 29 des Aufnahmebereichs 9 und der Rand der Membran 11 weisen jeweils zueinander komplementär ausgebildeten Wulste 30, 31 und Rillen 32, 33 auf, wodurch ein Formschluss zwischen der Membran 11 und dem Ventilgehäuse und eine definierte Position der Membran 11 erreicht wird.

Das neue Membranventil 1 verwendet zum Zusammenbau keine Schrauben, Federn oder Muttern, die senkrecht zur Strömungsrichtung das Gehäuseunterteil 3 durchbohren, wie das bei herkömmlichen Membranventilen der Fall ist. Das Ventilgehäuse erhält hierdurch in der Richtung der Spindel gesehen eine runde statt einer quadratischen Form. Das Membranventil 1 kann im Wesentlichen aus Kunststoffteilen hergestellt werden und kann ohne metallische Elemente wie Schrauben, Federn, und Muttern hergestellt werden. Sollte die Klemmung der Membran 11 im Verlauf der Lebensdauer nachlassen, so kann das Gehäuseoberteil 2 mit dem Gehäuseunterteil 3 nachträglich weiter zusammengeschraubt werden um eine ausreichende Klemmung zu gewährleisten. Weil die Klemmung der Membran 11 alleine durch das Einschrauben des Gehäuseoberteil 2 in dem Gehäuseunterteil 3 hergestellt wird, ist die Klemmung wesentlich gleichmässiger als bei herkömmlichen Membranventilen, wo eine eher punktförmige Klemmung durch vier Schrauben in den Ecken des Ventilgehäuses erreicht wird.

Der Strömungskanal 17 zwischen den Rohrverbindungselementen 7, 8 ist im Gehäuseunterteil 3 so ausgebildet, dass die Querschnittsfläche über die gesamte Länge des Strömungskanals 17 in einem zentralen Bereich 51 des Membranventils 1 im geöffneten Zustand konstant ist. In Strömungsrichtung gesehen, nimmt die Querschnittsfläche nacheinander eine kreisförmige Form, eine ovale Form und wieder eine kreisförmige Form an. Die Übergänge zwischen diesen Formen sind kontinuierlich ausgebildet.

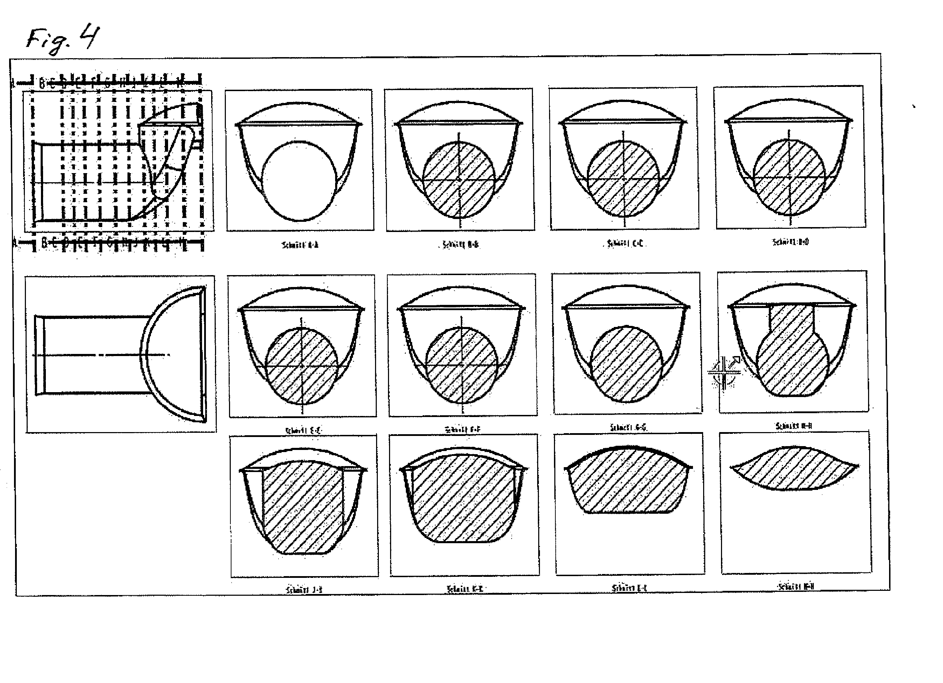

In Figur 4 sind zwölf Schnitte durch den Strömungskanal eines herkömmlichen Membranventils dargestellt. Die Schnitte sind an aufeinander folgenden Stellen im Strömungskanal, vom Anfang des Strömungskanals beim Rohrverbindungselement bis zur Mittellinie der Membran gelegt. Die Querschnittsflächen sind jeweils schraffiert dargestellt. Die Form der Querschnittsflächen ändert sich von kreisförmig über flaschenförmig, rechtwinklig mit abgerundeten Ecken bis tropfenförmig.

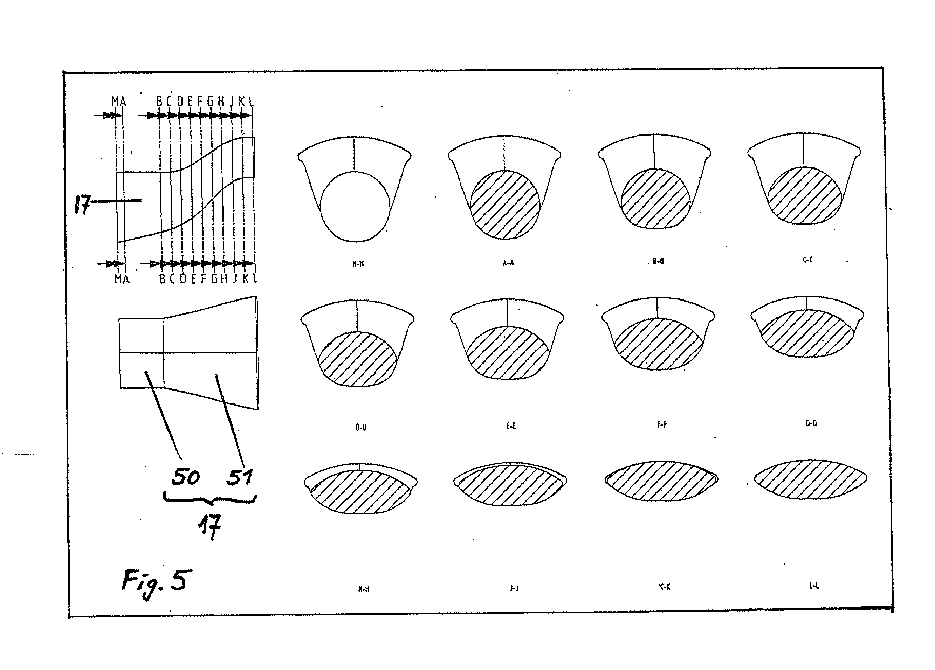

In Figur 5 sind weitere zwölf Schnitte durch den Strömungskanal 17 des erfindungsgemässen Membranventils 1 dargestellt. Die Schnitte sind ebenfalls an aufeinander folgenden Stellen im Strömungskanal 17, vom Anfang des Strömungskanals 17 beim Rohrverbindungselement 7,8 bis zur Mittellinie der Membran 11 gelegt. Die Querschnittsflächen sind jeweils schraffiert dargestellt. Die Form der Querschnittsflächen ändert sich von kreisförmig am Anfang des Gehäuseunterteils 3 bis oval in einem zentralen Bereich 51 unterhalb der Membran 11.

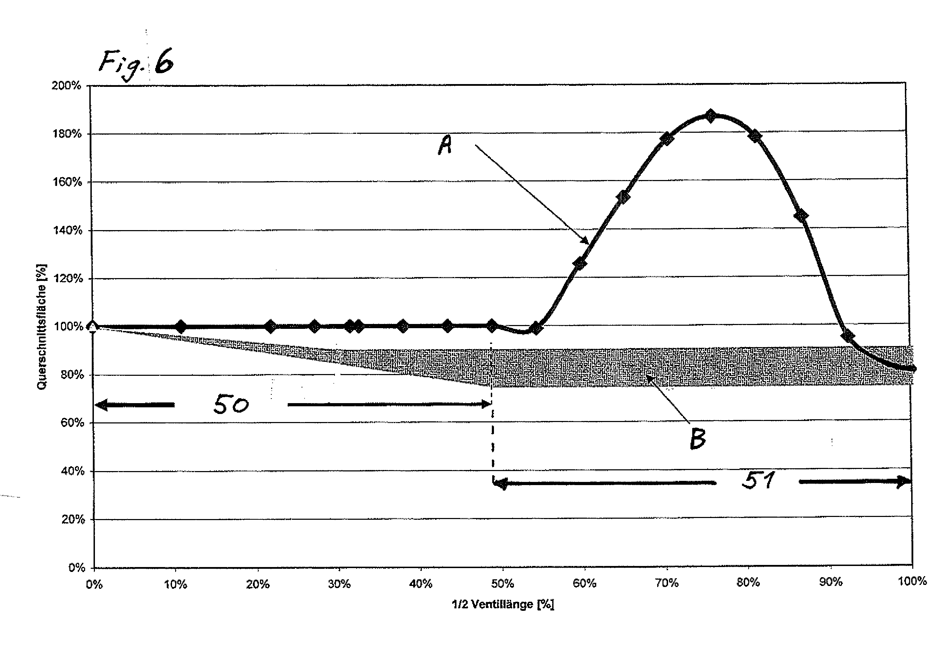

In Figur 6 ist die Änderung der Querschnittsfläche im Strömungskanal 17 über die halbe Länge des Membranventils 1 vom Eingang des Gehäuseunterteils 3 bis zur Mittellinie der Membran 11 dargestellt. Die Änderung ist in Prozenten bezogen auf die Querschnittsfläche am Eingang des Gehäuseunterteils 3 dargestellt. Die Ventillänge umfasst einen Eingangsbereich 50 von 0% bis etwa 50% der halben Ventillänge und einen zentralen Bereich 51 von etwa 50% bis 100% der halben Ventillänge. In Figur 6 stellt die Linie A die Änderung der Querschnittsfläche im Strömungskanal eines herkömmlichen Membranventils dar. Aus der Linie A in Figur 6 ist abzulesen, dass sich die Querschnittsfläche im zentralen Bereich des Membranventils, d.h. unterhalb der Membran, mehrmals drastisch ändert, was zu erheblichen Druckdifferenzen und Schwankungen im Wirkungsgrad des Membranventils führt.

Der schraffierte Bereich B in Figur 6 stellt die Änderung der Querschnittsfläche im Strömungskanal 17 des erfindungsgemässen Membranventils 1 dar. Der Bereich B gibt ebenfalls die Toleranzgrenzen der prozentualen Änderung beim erfindungsgemässen Membranventil 1 wieder. Aus dem Bereich B in Figur 6 ist abzulesen, dass im Eingangsbereich 50 des Strömungskanals 17 die Querschnittsfläche kontinuierlich von 100% auf etwa 85% bis 75% abnimmt, und dass im anschliessenden zentralen Bereich 51 die Querschnittsfläche bei etwa 75% bis 85% des Anfangswertes konstant bleibt.

In Figur 2 sind im Innengehäuse 10 weitere Elemente der Ventilbetätigung ersichtlich: ein Druckstück 16, das zur gleichmässigen Verformung der Membran 11 dient, die eigentliche Spindel 18 und eine Spindelmutter 19, die dafür sorgt , dass die Drehbewegung des Handrades 4 in eine axiale Bewegung der Spindel 5 mit dem Druckstück 16 umgesetzt wird. In Figur 3 sind das Gehäuseunterteil 3, die Membran 11 und ein Membranstift 20 perspektivisch und geschnitten dargestellt.

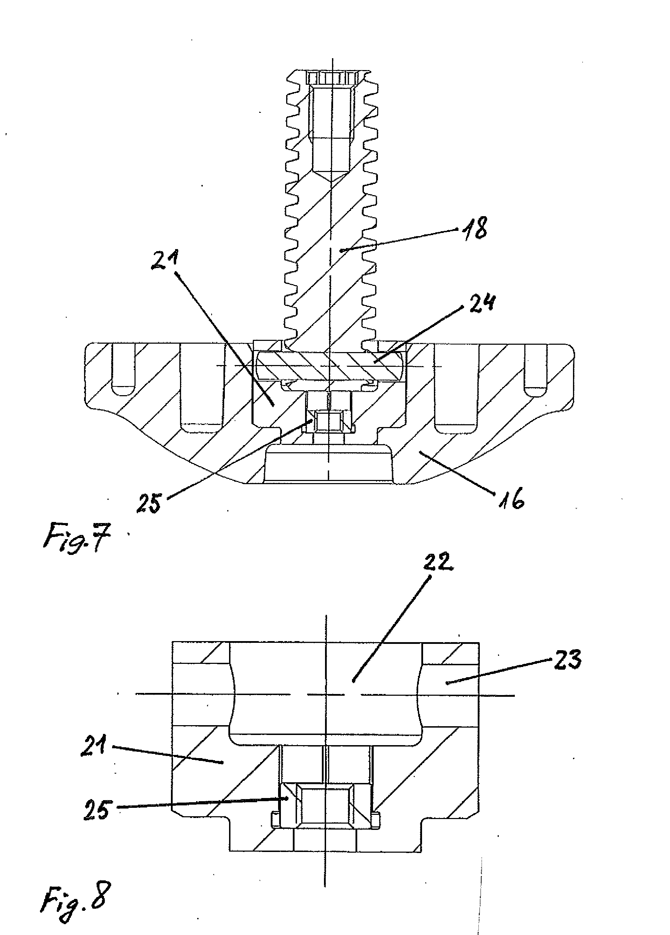

In Figur 7 ist eine Verbindungsmutter 21 als Verbindungsglied zwischen Membranstift 20 und der Spindelanordnung geschnitten dargestellt. Der Membranstift 20 ist ein Metallstift, der im Mittelpunkt der Membran 11 befestigt ist und der ein Aussengewinde aufweist. Der Metallstift 20 ist mit einer kleineren Befestigungsmutter 25 schraubbar verbunden. Die Befestigungsmutter 25 weist eine Höhe auf, die geringer ist als die Tiefe des unteren Teils der Längsbohrung 22 und liegt mit einem Spiel in axialer Richtung in die Verbindungsmutter 21. Die Verbindungsmutter 21 selbst ist ausgebildet als eine grössere Mutter, die in einem Sechskantloch im Druckstück 16 ebenfalls mit einem Spiel in axialer Richtung eingelegt wird. In Figur 8 ist die Verbindungsmutter 21 zusammen mit der Befestigungsmutter 25 geschnitten dargestellt. Die Verbindungsmutter 21 selbst weist eine Längsbohrung 22 zur Aufnahme der Spindel 18 und eine Querbohrung 23 zur Aufnahme eines Querstiftes 24 auf, der ebenfalls mit der Spindel 18 verbunden ist.

Beim Schliessvorgang wird die Schliesskraft mit der Verbindungsmutter 21 auf dem Druckstück 16 und auf die Membran 11 eingeleitet. Beim Schliessen des Membranventils 1 verschieben sich die Befestigungsmutter 25 und der Membranstift 20 frei nach oben. Hiermit wird erreicht, dass die Kräfte zur Betätigung des Membranventils 1 entkoppelt werden und dass die Membran 11 möglichst wenig belastet wird. Die Spindel 18 ist nicht fest verbunden mit der Membran 11. Das Handrad 4 dreht sich ohne Axialbewegung und entfernt sich bei der Betätigung nicht vom Gehäuseoberteil 2 des Membranventils 1. Das Handrad 4 ist mittels einer hohlen Vielkeilwelle mit der Spindelmutter 19 verbunden. Die Spindelmutter 19 führt somit auch keine Axialbewegung aus. Die Spindel 18 steht mit dem Gewinde der Spindelmutter 19 im Eingriff. Die Spindelmutter 15 setzt somit die Drehbewegung des Handrades 4 um in einer Axialbewegung der Verbindungsmutter 21. Beim Öffnen des Membranventils 1 wird die Membran 11 mit der Befestigungsmutter 25, die mit dem Membranstift 20 verbunden ist, angehoben.

Das Membranventil 1 zeichnet sich aus durch eine kompakte und runde Bauform. Es wird im Wesentlichen aus Spritzgussteilen hergestellt. Durch die besondere Ausbildung des Strömungskanals 17 ist der Druckverlust im Membranventil minimal. Durch die Verschraubung des Gehäuseoberteils 2 mit dem Gehäuseunterteil 3 wird eine nachträgliche Anpassung der Membranbefestigung vereinfacht und ist die Membran 11 rundum gleichmässiger eingeklemmt. Anstelle des Handrades 4 kann auch ein pneumatischer oder anderer fernsteuerbarer Antrieb auf dem Membranventil 1 aufgesetzt werden.

## Patentansprüche

1. Spindelanordnung für ein Membranventil enthaltend eine Spindel (18), ein Druckstück (16), eine Verbindungsmutter (21) und eine Befestigungsmutter (25) **dadurch gekennzeichnet, dass** die Befestigungsmutter (25) mit dem Membranstift (20) verbunden ist, wobei die Befestigungsmutter (25) axial verschiebbar angeordnet ist.

2. Spindelanordnung nach Anspruch 1, **dadurch gekennzeichnet, dass** die Befestigungsmutter (25) ein Polygon ist, vorzugsweise ein Sechskant.

3. Spindelanordnung nach einem der Ansprüche 1 oder 2, **dadurch gekennzeichnet, dass** die Befestigungsmutter (25) in der Verbindungsmutter (21) axial verschiebbar angeordnet ist.

4. Spindelanordnung nach Anspruch 1, **dadurch gekennzeichnet, dass** die Spindel (18) mittels eines Querstifts (24) mit der Verbindungsmutter (21) verbunden ist.

5. Spindelanordnung nach einem der vorangehenden Ansprüche, **dadurch gekennzeichnet, dass** die Verbindungsmutter (21) ein Polygon ist, vorzugsweise eine Sechskant.

6. Spindelanordnung nach eine der vorangehenden Ansprüche, **dadurch gekennzeichnet, dass** die Verbindungsmutter (21) im Druckstück (16) angeordnet ist.
